# EUROPEAN PATENT SPECIFICATION

(11) **EP 2 063 676 B1**
(45) Date of publication and mention of the grant of the patent: **11.01.2012**
(21) Application number: 07425734.6
(22) Date of filing: 20.11.2007
(51) Int. Cl.: H04W 24/00

(54) **Mobile-terminal simulator for a wireless telecommunications network**
Mobiles-Endgerät-Simulator für ein drahtloses Kommunikationsnetz
Simulateur de terminal mobile pour un réseau de communications sans fil

(43) Date of publication of application: 27.05.2009
(73) Proprietor: Prisma Engineering S.r.l., 20127 Milano (IT)
(72) Inventor: Marini, Paolo, 20152 Milano (IT); Bendinelli, Enrico, 20052 Monza (IT)
(74) Representative: Jorio, Paolo

(56) References cited:
- EP-A- 1 489 866
- WO-A-2006/007714
- GB-A- 2 232 850
- US-A1- 2003 236 089
- "Agilent Technologies 85902A Burst Carrier Trigger and RF Preamplifier" OPERATING AND SERVICE GUIDE, January 2000 (2000-01), pages 1-20, XP002481889 USA

## Description

The present invention relates to a mobile-terminal simulator for a wireless telecommunications network.

As is known, wireless telecommunications systems comprise a network infrastructure and mobile terminals. The network infrastructure generally comprises one or more interconnected network management centres and radio base stations, which are organized so as to ensure coverage of a given territory and communicate with a respective network management centre. The mobile terminals are connected to the network infrastructure through one or more of the radio base stations and can comprise for example cellphones, portable computers, or palmtops with functions of radio-frequency (RF) connection and the like.

The network infrastructure needs to undergo tests that enable verification of proper functionality thereof. The tests of the entire network infrastructure or of a part thereof can become necessary for various reasons. For instance, in the design and production stages, it could be necessary to verify the functionality of the radio base station in connection with one or more terminals, the behaviour whereof can be modified in order to simulate situations of failure or errors in the communication protocol. Furthermore, it could be necessary to verify the expected behaviour of the radio base station in the presence of a network load determined by a number of simultaneously active user terminals.

For this purpose, test simulators are normally employed, which, in practice, enable simulation of the connection to the network infrastructure and its use by one or more mobile terminals. In this way, it is possible to submit the network infrastructure or a part thereof to pre-determined operative conditions and to evaluate the response of the entire system on the basis of given parameters.

A mobile-terminal simulator generally comprises at least one control module, a protocol module, a baseband-modem module, and an RF module, which enables radio-frequency connection to one or more base stations of the network infrastructure. The protocol module and the baseband-modem module have, respectively, the function of simulating the behaviour of one or more user terminals and of managing, at a physical level, channel coding, cyclic-redundancy and error-correction codes, synchronisation, access to the radio channel, and analog-to-digital conversion of the signals travelling between the protocol module and the RF module, according to one or more network communication standards.

Each radio base station comprises at least one baseband processor module, and at least one RF module, coupled thereto. In practice, the RF module carries out a radio-frequency translation of the signals coming from the baseband processor module and, vice versa, a baseband translation of the signals received, which are to be transferred to the baseband processor module.

The RF module of the simulator, as has been mentioned, communicates in radio frequency with one or more radio base stations, in particular with the RF module of each of them. However, the radio-frequency communication with the radio base stations involves certain considerable disadvantages. In particular, it is necessary to take into account phenomena that degrade the signal, such as attenuation, reflection of signals, and superposition of disturbance signals and noise sources, which mask the useful signal. Another source of disturbance is represented by possible interference with signals of other mobile terminals in use in the environment in which the tests are conducted. Furthermore, there are also difficulties due to poor repeatability of the radio conditions, and mechanical problems linked to cables, couplers and connectors optimised for the high frequencies involved.

According to US 2003/00236089, a mobile-terminal simulator of a wireless telecommunications network comprises a control module, a protocol simulator and a baseband-modem module, coupled to the protocol simulator. The mobile-terminal simulator has the purpose of testing the base stations of the wireless telecommunications network.

WO 2006/0077 14 A1 discloses a method for generating simulator mobile terminal access probes for self-testing base station receives, wherein simulation signals are generated within the base station and injected at baseband rather than at RF level.

The aim of the present invention is thus to provide a mobile-terminals simulator of a wireless telecommunications network, which enables to overcome the drawbacks described.

According to the present invention, a mobile-terminal simulator of a wireless telecommunications network is provided, as specified in Claim 1. Furthermore, a telecommunications system comprising such a simulator is specified is claim 13.

The present invention will now be described with reference to the annexed drawings, which illustrate some non-limiting examples of embodiment thereof and in which:
- Figure 1 is a simplified block diagram of a wireless telecommunications system;
- Figure 2 is a more detailed block diagram of a portion of the wireless telecommunications system of Figure 1 and of a mobile-terminal simulator according to one embodiment of the present invention, connected to the wireless telecommunications system;
- Figure 3 is a more detailed block diagram of a first portion of the mobile-terminal simulator of Figure 2;
- Figure 4 is a more detailed block diagram of a second portion of the mobile-terminal simulator of Figure 2;
- Figure 5 is a block diagram of a portion of the wireless telecommunications system of Figure 1 and of a mobile-terminal simulator according to an alternative embodiment of the present invention, connected to the wireless telecommunications system;
- Figure 6 is a block diagram of the mobile-terminal simulator of Figure 2 in one operating mode; and
- Figure 7 is a block diagram of the mobile-terminal simulator of Figure 2 in a different operating mode.

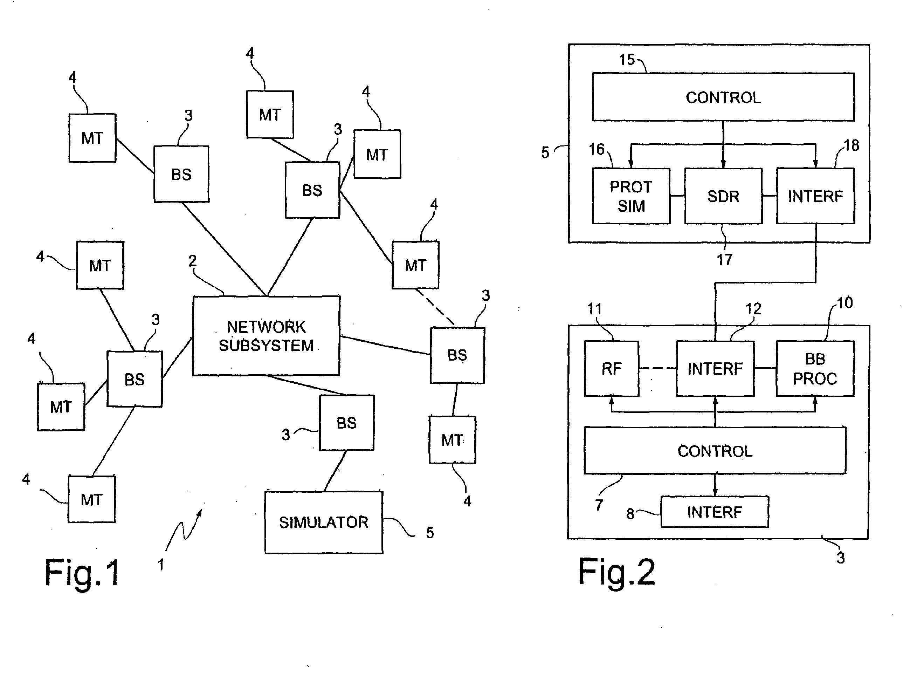

Figure 1 is a simplified illustration of a wireless telecommunications system, designated as a whole by the reference number 1, which comprises a network subsystem 2, a plurality of radio base stations 3 and a plurality of mobile terminals 4. Hereinafter, by "wireless telecommunications system" is meant a telecommunications system in which at least coupling between the mobile terminals and a network infrastructure is obtained by radio-frequency connection.

In the example described herein, the network infrastructure, to which the mobile terminals 4 can be connected, is defined by the network subsystem 2 and by the radio base stations 3, permanently connected thereto. In particular, the mobile terminals 4 can activate a connection through one of the radio base stations 3, selected so as to optimize the signal transmission and reception according to modalities set by the standard implemented. Figure 1 shows moreover a mobile-terminal simulator 5, connected to one of the radio base stations 3 in order to conduct functionality tests on the telecommunications system 1 or on a part thereof.

In Figure 2, the mobile-terminal simulator 5 and the radio base station 3 to which it is connected are illustrated in greater detail.

The radio base station 3 comprise a control module 7, a network interface 8, for communication to the network subsystem 2, at least one baseband processor module 10, at least one RF module 11 for RF communication with the mobile terminals 4 and an internal interface 12.

The baseband processor module 10 manages the functions necessary for bi-directional communication with the mobile terminals 5 by processing operations carried out on baseband signals. In particular, the baseband processor module 10 is responsible for channel coding, management of the cyclic-redundancy and error-correction codes, and synchronisation and access to the radio channel. For this purpose, the baseband processor module 10 is coupled to the network subsystem 2 through the network interface 8, in a conventional way, and to the RF module 11 through the internal interface 12. In greater detail, the RF module 11 performs a baseband-to-RF frequency conversion of the signals transmitted to the mobile terminals 5, supplying the necessary power amplification. The RF module 11 also carries out RF-to-baseband conversion of the signals received that are to be forwarded to the baseband processor module 10. The internal interface 12, which can be of a proprietary type or built according to a public standard, enables exchange of signals between the baseband processor module 10 and the RF module 11. In particular, the internal interface 12 enables exchange of analog signals or of samples of in-phase and quadrature signals in reception and transmission and carries control signals for the RF module 11. The internal interface 12 can include able, fibre, or wireless connection means and enables, among other things, creation of remote RF modules, which can be located in the proximity of the antenna mast of the radio base station. For example, the internal interface 12 can be made according to the standard RP3 OBSAI (Open Base Station Architecture Initiative) or else CPRI (Common Public Radio Interface).

The structure of the radio base station 3 described is common to all the other radio base stations 3 of the telecommunications system 1. Possibly, the radio base stations 3 can differ as regards the number of baseband processor modules 10 and/or RF modules 11, in addition to further auxiliary components not illustrated herein for reasons of simplicity.

The user-terminal simulator 5 comprises a control module 15, a protocol simulator 16, a baseband-modem module, which in the embodiment described herein is obtained by means of a software-defined-radio (SDR) platform 17, and a baseband interface 18.

The control module 15 co-ordinates operation of the protocol simulator 16 and of the SDR platform 17, which is programmable.

The protocol-simulator module 16 is programmable and is configured for providing a plurality of state machines that implement protocol stacks specific for a given wireless telecommunications standard used in the telecommunications system 1. More precisely, a protocol stack is defined by a set of state machines that implement respective protocol levels. In what follows, the expression "instance of a protocol stack" will be used to indicate a set including one instance of each of the state machines necessary for implementing said protocol stack.

The protocol-simulator module 16 is configured for implementing different instances of one and the same protocol stack corresponding to a telecommunications standard. Furthermore, the protocol-simulator module 16 is configured for implementing one or more instances of protocol stacks corresponding to different telecommunications standards (for example, WiMAX, GSM, GPRS, EDGE, UMTS, IS-95, EvDO, and CDMA2000). In this way, the protocol-simulator module 16 is able to simulate the behaviour of different mobile terminals 5 based upon one and the same standard or upon different standards, which are connected to a portion of the telecommunications system 1 under test.

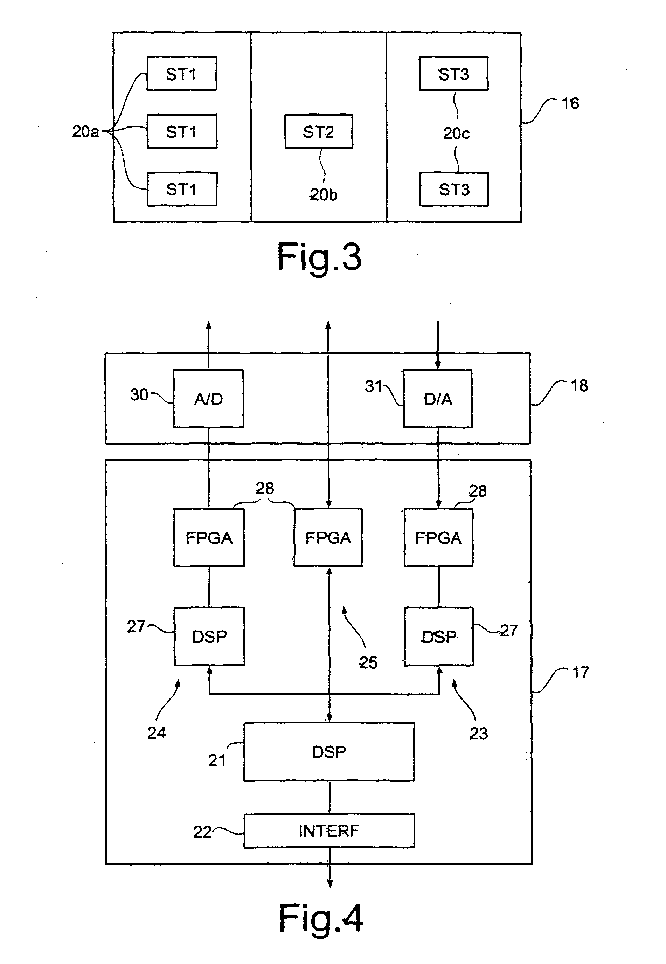

In the example illustrated in Figure 3, the protocol-simulator module 16 provides three instances of a first protocol stack 20a, corresponding to a first telecommunications standard ST1, one instance of a second protocol stack 20b, corresponding to a second telecommunications standard ST2, and two instances of a third protocol stack 20c, corresponding to a third telecommunications standard ST3.

The SDR platform 17 is coupled to the protocol-simulator module 16 and can be connected to one or more base stations 3 via the baseband interface 18. The SDR platform 17 provides the physical level of modulation and demodulation and implements at least the following functions:
- transforming sequences of bits coming from the protocol-simulator module 16 into sequences of digital samples of in-phase and quadrature (IQ) signals suited to being transmitted in radio frequency after prior digital-to-analog and frequency conversion, according to the physical-level standard for the telecommunications system simulated; and
- receiving sequences of samples obtained from the digital-to-analog conversion of in-phase and quadrature (IQ) RF signals and producing sequences of bits to be sent to the protocol-simulator module 16.

An example of architecture of the SDR platform 17, independent of the standard implemented, is illustrated in Figure 4. In this case, the SDR platform 17 comprises a main processor 21, an analog-input path 23, an analog-output path 24, and a digital bi-directional path 25. The main processor 21, which in the embodiment described herein is a DSP (Digital Signal Processor), is connected to the control module 15 and to the protocol-simulator module 16 through an Ethernet interface 22. The analog-input path 23 and the analog-output path 24 enable handling of, respectively, numeric signals deriving from the digital-to-analog conversion of input signals coming from a radio base station 3 (downlink) and numeric output signals for digital-to-analog conversion and subsequent analog transmission to a radio base station 3 (uplink). The analog-input path 23 and the analog-output path 24 comprise respective auxiliary processor 27 (also these are DSPs) and respective FPGA (Field-Programmable Gate Array) logic arrays 28. A further FPGA logic array 28 is used for creating the bi-directional digital channel 25 that transfers signals from and to the radio base station 3 in a digital format. An architecture of SDR platform like the one described enables implementation of baseband processing algorithms for the most widespread communications standards and supplies the processing potential for supporting simulation of a single mobile terminal or of a plurality of simultaneously active mobile terminals. The SDR architecture moreover enables interfacing with radio base stations by means of both analog and digital interfaces.

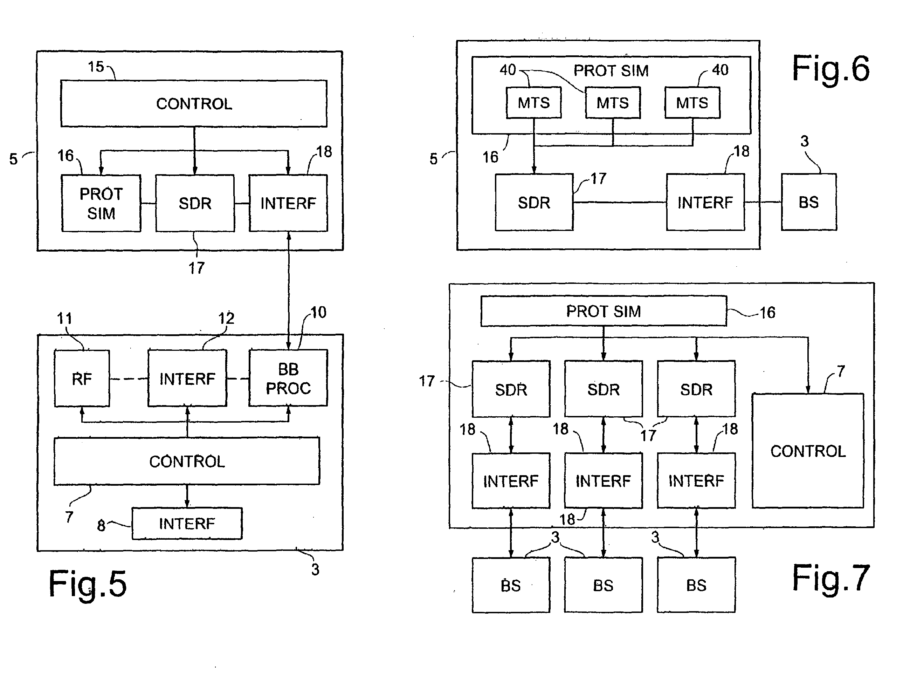

The baseband interface 18 can be connected to at least one radio base station 3 for setting up a low-frequency connection. Here and in what follows, the expression "low-frequency connection" is meant to indicate a connection that supports a communication in frequency bands lower than radio frequencies and, in particular, in baseband or in intermediate frequency bands between the baseband and radio frequencies. The baseband interface 18 is connected to the baseband processor module 10 through the internal interface 12 of the radio base station 3 (Figure 2) or directly (Figure 5). In either case, the mobile-terminal simulator 5 replaces the RF module 11, which is disconnected. In one embodiment (not illustrated), the RF module 11 remains connected to the internal interface 12.

The communication between the mobile-terminal simulator 5 and the radio base station 3 is therefore made in baseband, without any need for conversion from and to the radio frequencies.

In the example of Figure 4, the baseband interface 18 comprises an analog-to-digital converter 30 and a digital-to-analog converter 31 coupled, respectively, to the analog-input path 23 and to the analog-output path 24 of the SDR platform 17. Furthermore, the baseband interface 18 routes the digital traffic between the radio base station 3 and the SDR platform 17 through the digital bi-directional path 25.

The mobile-terminal simulator 5 described advantageously prevents RF communication with the radio base stations 3 during testing. Consequently, the problems of processing of the signals already described and linked to the use of radio-frequency bands are avoided. Furthermore, the mobile-terminal simulator 5 according to the invention is of simpler construction and less costly than conventional simulators. The mobile-terminal simulator 5 is moreover flexible, since it is to a large extent made up of programmable functional blocks. It is thus possible in a simple and fast way to implement different telecommunications standards, also during one and the same simulation, for example, in order to conduct tests on radio base stations 3 of a multistandard type.

Some operating modes of the mobile-terminal simulator 5 will be hereinafter described, which may be used to submit to verification operation of one or more radio base station 3 or the entire network functionality between different mobile terminals. The mode of operation is selected by the control module 15, which consequently sets the protocol-simulator module 16.

In a first operating mode, the mobile-terminal simulator 5 is used for testing the baseband physical level of the radio base station 3 under test (Figure 6). In practice, the physical level of a plurality of simulated mobile terminals 40 is generated, each of which includes an instance of a state machine connected in communication with the SDR platform 17 and, through the baseband interface 18, with the radio basle station 3. The simulated mobile terminals 40 are used for verifying the functionality of data transmission (modulation and demodulation) and multiplexing on different users (i.e., each simulated mobile terminal 40; in the example, the multiplexing function is performed in part by the control module 15 and in part by the baseband processor module 17 of the simulator 5). The mobile-terminal simulator 5 is configured so as to conduct the test in expected conditions and for simulating errors or interferences in the signals received and transmitted and carrying out verifications in non-optimal conditions of operation.

In a second operating mode, the mobile-terminal simulator 5 generates a plurality of simulated simultaneously active mobile terminals 40 and connected to the radio base station 3. In particular, the parameters of transmission of the signals of the simulated mobile terminals 40 are controlled so as to simulate independent transmissions with different intensities. The second operating modes enables verification of the functionalities of the radio base station 3 linked to management of the interference and to mobility of the terminals.

In a third operating mode, the mobile-terminal simulator 5 includes a plurality of SDR platforms 17 and respective baseband interfaces 18 connected to respective base stations 3, as illustrated in Figure 7. In this case, the movement of a simulated mobile terminal 40 is simulated in an area served by the base stations 3 connected to the mobile-terminal simulator 5. In particular, the simulated mobile terminal 40 selects, from amongst the ones available, the radio base station 3 that best meets criteria of signal-to-interference ratio and quality of the signal. It is thus possible to simulate different conditions of "handover", i.e., of passage, between a number of base stations 3, of the communication with one and the same mobile terminal.

In a fourth operating mode, the mobile-terminal simulator 5 carries out verifications of power control, i.e., of maintenance of the minimum signal power that enables the requisites of intelligibility of the signal received by the radio base station connected thereto to be met.

In a fifth operating mode, the mobile-terminal simulator 5 carries out verifications of real physical channel. In other words, in managing a simulated mobile terminal 40, the mobile-terminal simulator 5 produces controlled conditions of sudden attenuation, which normally can be caused by reflections, multipath, interference conditions, fading, echo or Doppler effects.

In a sixth operating mode, the mobile-terminal simulator 5 generates a plurality of simulated mobile terminals 40 in motion within the area served by a radio base station 3 and between areas served by different base stations 3. There are thus verified procedures linked to mobility, in nominal conditions and introducing faults and errors for testing purposes.

In a seventh operating mode, the mobile-terminal simulator 5 is configured for conducting tests on protocols of higher level with respect to the physical level. The control module 15 operates so as to verify the stability and operation of the telecommunications system 1 in conditions of realistic use, with combinations of errors and faults from a physical level up to higher-level protocols in an independent, controlled, and reproducible way.

In an eighth operating mode, the mobile-terminal simulator 5 generates a plurality of simulated mobile terminals 40 for simulating the activities of users connected to the telecommunications system 1 through the radio base station 3 undergoing verification. In particular, voice, data and multimedia traffic is simulated.

Finally, it is evident that modifications and variations can be made to the mobile-terminal simulator described, without thereby departing from the scope of the present invention, as defined in the annexed claims.

## Claims

1. A mobile-terminal simulator of a wireless telecommunications network, comprising:
a control module (15);
a protocol simulator (16); and
a baseband-modem module (17), coupled to the protocol simulator (16);
**characterized in that** it comprises a baseband interface (18) for communicably coupling the baseband-modem module (17) with a radio base station (3) of a wireless telecommunications system (1) by a low-frequency connection.

2. The simulator according to Claim 1, wherein the baseband interface (18) is directly connectable to a baseband processor module (10) of the radio base station (3)

3. The simulator according to Claim 1, wherein the baseband interface (18) is connectable to a baseband processor module (10) of the radio base station (3) through an internal interface (12) of the radio base station (3).

4. The simulator according to any one of the preceding claims, comprising a plurality of baseband interfaces (18) for communicably coupling the baseband-modem module (17) with respective radio base stations (3) by low-frequency connections.

5. The simulator according to any one of the preceding claims, wherein the baseband-modem module (17) comprises a Software-Defined Radio platform.

6. The simulator according to Claim 5, wherein the baseband-modem module (17) is programmable.

7. The simulator according to any one of the preceding claims, wherein the protocol simulator (16) is configured to implement at least one instance of a protocol stack (20a, 20b, 20c), corresponding to a telecommunications standard (ST1, ST2, ST3) usable by a mobile terminal (4) of the wireless telecommunications system (1).

8. The simulator according to Claim 7, wherein the protocol simulator (16) is configured to implement a plurality of instances (20a, 20c) of the protocol stack.

9. The simulator according to Claim 7 or Claim 8, wherein the protocol simulator (16) is configured to implement at least one instance of each of a plurality of protocol stacks (20a, 20b, 20c), corresponding to respective telecommunications standards (ST1, ST2, ST3) usable by mobile terminals (4) of the wireless telecommunications system (1).

10. The simulator according to any one of the preceding claims, wherein the low-frequency connection is a baseband connection.

11. The simulator according to any one of Claims 1-9, wherein the low-frequency connection is a connection in an intermediate-frequency band between baseband and the radio frequencies.

12. The simulator according to any one of the preceding claims, comprising a control module (15), coupled to the protocol simulator (16) and to the baseband-modem module (17) for selecting one of a plurality of operating modes, in order to submit to verification at least one portion of a wireless telecommunications system (1).

13. A telecommunications system comprising at least one radio base station (3) and a mobile-terminal simulator (5) of a wireless telecommunications network (1) according to any one of the preceding claims, connected to the radio base station (3).

14. The system according to Claim 13, wherein the radio base station (3) comprises a baseband processor module (10), an RF module (11) and an internal interface (12) for connecting the baseband processor module (10) and the RF module (11) by a low-frequency connection.

15. The system according to Claim 14, wherein the baseband interface (18) is directly coupled to the baseband processor module (10).

16. The system according to Claim 14, wherein the baseband interface (18) is coupled to the baseband processor module (10) through the internal interface (12).

## Patentansprüche

1. Mobiles-Endgerät-Simulator für ein drahtloses Telekommunikationsnetz, der aufweist:
ein Steuermodul (15);
einen Protokollsimulator (16); und
ein Basisbandmodemmodul (17), das mit dem Protokollsimulator (16) gekoppelt ist;
**dadurch gekennzeichnet, dass** er eine Basisbandschnittstelle (18) aufweist, um das Basisbandmodemmodul (17) durch eine Niederfrequenzverbindung kommunikativ mit einer Funkbasisstation (3) eines drahtlosen Telekommunikationssystems zu koppeln.

2. Simulator nach Anspruch 1, wobei die Basisbandschnittstelle (18) direkt mit einem Basisbandprozessormodul (10) der Funkbasisstation (3) verbindbar ist.

3. Simulator nach Anspruch 1, wobei die Basisbandschnittstelle (18) durch eine interne Schnittstelle (12) der Funkbasisstation (3) mit einem Basisbandprozessormodul (10) der Funkbasisstation (3) verbindbar ist.

4. Simulator nach einem der vorhergehenden Ansprüche, der mehrere Basisbandschnittstellen (18) für die kommunikative Kopplung des Basisbandmodemmoduls (17) mit jeweiligen Funkbasistationen (3) durch Niederfrequenzverbindungen aufweist.

5. Simulator nach einem der vorhergehenden Ansprüche, wobei das Basisbandmodemmodul (17) eine softwaredefinierte Funkplattform aufweist.

6. Simulator nach Anspruch 5, wobei das Basisbandmodemmodul (17) programmierbar ist.

7. Simulator nach einem der vorhergehenden Ansprüche, wobei der Protokollsimulator (16) konfiguriert ist, um wenigstens eine Instanz eines Protokollstapels (20a, 20b, 20c) zu implementieren, der einem Telekommunikationsstandard (ST1, ST2, ST3) entspricht, der von einem mobilen Endgerät (4) des drahtlosen Kommunikationssystems (1) verwendet werden kann.

8. Simulator nach Anspruch 7, wobei der Protokollsimulator (16) konfiguriert ist, um mehrere Instanzen (20a, 20c) eines Protokollstapels zu implementieren.

9. Simulator nach Anspruch 7 oder Anspruch 8, wobei der Protokollsimulator (16) konfiguriert ist, um wenigstens eine Instanz jedes von mehreren Protokollstapeln (20a, 20b, 20c) zu implementieren, die jeweiligen Telekommunikationsstandards (ST1, ST2, ST3) entsprechen, die von mobilen Endgeräten (4) des drahtlosen Telekommunikationssystems (1) verwendet werden können.

10. Simulator nach einem der vorhergehenden Ansprüche, wobei die Niederfrequenzverbindung eine Basisbandverbindung ist.

11. Simulator nach einem der Ansprüche 1 - 9, wobei die Niederfrequenzverbindung eine Verbindung in einem Zwischenfrequenzband zwischen dem Basisband und den Funkfrequenzen ist.

12. Simulator nach einem der vorhergehenden Ansprüche, der ein Steuermodul (15) aufweist, das mit dem Protokollsimulator (16) und mit dem Basisbandmodemmodul (17) gekoppelt ist, um eine aus mehreren Betriebsarten auszuwählen, um wenigstens einen Abschnitt eines drahtlosen Telekommunikationssystems (1) einer Prüfung zu unterziehen.

13. Telekommunikationssystem, das wenigstens eine Funkbasisstation (3) und einen mobiles-Endgerät-Simulator (5) eines drahtlosen Telekommunikationsnetzes (1) gemäß einem der vorhergehenden Ansprüche aufweist, der mit der Funkbasisstation (3) verbunden ist.

14. System nach Anspruch 13, wobei die Funkbasisstation (3) ein Basisbandprozessormodul (10), ein HF-Modul (11) und eine interne Schnittstelle (12) zum Verbinden des Basisbandprozessormoduls (10) und des HF-Moduls durch eine Niederfrequenzverbindung aufweist.

15. System nach Anspruch 14, wobei die Basisbandschnittstelle (18) direkt mit dem Basisbandprozessormodul (10) verbunden ist.

16. System nach Anspruch 14, wobei die Basisbandschnittstelle (18) durch die interne Schnittstelle (12) mit dem Basisbandprozessormodul (10) gekoppelt ist.

## Revendications

1. Simulateur de terminaux mobiles d'un réseau de télécommunications sans fil, comprenant :
un module de commande (15) ;
un simulateur de protocoles (16) ; et
un module modulateur-démodulateur (MODEM) en bande de base (17),
couplé au simulateur de protocoles (16) ;
**caractérisé en ce qu'**il comprend une interface en bande de base (18) pour coupler de manière communicante le module modulateur-démodulateur (MODEM) en bande de base (17) à une station de base radio (3) d'un système de télécommunications sans fil (1) par une connexion basse fréquence.

2. Simulateur selon la revendication 1, dans lequel l'interface en bande de base (18) est directement connectable à un module de processeur en bande de base (10) de la station de base radio (3).

3. Simulateur selon a revendication 1, dans lequel l'interface en bande de base (18) est connectable à un module de processeur en bande de base (10) de la station de base radio (3) par le biais d'une interface interne (12) de la station de base radio (3).

4. Simulateur selon l'une quelconque des revendications précédentes, comprenant une pluralité d'interfaces en bande de base (18) pour coupler de manière communicante le module modulateur-démodulateur (MODEM) en bande de base (17) aux stations de base radio (3) respectives par des connexions basse fréquence.

5. Simulateur selon l'une quelconque des revendications précédentes, dans lequel le module modulateur-démodulateur (MODEM) en bande de base (17) comprend une plate-forme radiologicielle.

6. Simulateur selon la revendication 5, dans lequel le module modulateur-démodulateur (MODEM) en bande de base (17) est programmable.

7. Simulateur selon l'une quelconque des revendications précédentes, dans lequel le simulateur de protocoles (16) est configuré pour mettre en oeuvre au moins une instance d'une pile de protocoles (20a, 20b, 20c), correspondant à une norme de télécommunications (ST1, ST2, ST3) utilisable par un terminal mobile (4) du système de télécommunications sans fil (1).

8. Simulateur selon la revendication 7, dans lequel le simulateur de protocoles (16) est configuré pour mettre en oeuvre une pluralité d'instances (20a, 20c) de la pile de protocoles.

9. Simulateur selon la revendication 7 ou la revendication 8, dans lequel le simulateur de protocoles (16) est configuré pour mettre en oeuvre au moins une instance de chacune d'une pluralité de piles de protocoles (20a, 20b, 20c), correspondant aux normes de télécommunications (ST1, ST2, ST3) respectives utilisables par des terminaux mobiles (4) du système de télécommunications sans fil (1).

10. Simulateur selon l'une quelconque des revendications précédentes, dans lequel la connexion basse fréquence est une connexion en bande de base.

11. Simulateur selon l'une quelconque des revendications 1 à 9, dans lequel la connexion basse fréquence est une connexion dans une bande de fréquences intermédiaires entre la bande de base et les fréquences radio.

12. Simulateur selon l'une quelconque des revendications précédentes, comprenant un module de commande (15), couplé au simulateur de protocoles (16) et au module modulateur-démodulateur (MODEM) en bande de base (17) pour sélectionner l'un d'une pluralité de modes opératoires, afin de soumettre à vérification au moins une partie d'un système de télécommunications sans fil (1).

13. Système de télécommunications comprenant au moins une station de base radio (3) et un simulateur de terminaux mobiles (15) d'un réseau de télécommunications sans fil (1) selon l'une quelconque des revendications précédentes, connecté à la station de base radio (3).

14. Système selon la revendication 13, dans lequel la station de base radio (3) comprend un module de processeur en bande de base (10), un module RF (11) et une interface interne (12) pour connecter le module de processeur en bande de base (10) et le module RF (11) par une connexion basse fréquence.

15. Système selon la revendication 14, dans lequel l'interface en bande de base (18) est directement couplée au module de processeur en bande de base (10).

16. Système selon la revendication 14, dans lequel l'interface en bande de base (18) est couplée au module de processeur en bande de base (10) par le biais de l'interface interne (12).
